# EUROPÄISCHE PATENTSCHRIFT

(11) **EP 3 892 084 B1**
(45) Veröffentlichungstag und Bekanntmachung des Hinweises auf die Patenterteilung: **03.08.2022**
(21) Anmeldenummer: 21167376.9
(22) Anmeldetag: 08.04.2021
(51) Int. Cl.: A01D 78/10, A01B 63/32

(54) **VERFAHREN ZUM BETREIBEN EINES MEHRKREISELSCHWADERS SOWIE MEHRKREISELSCHWADER**
MULTIPLE WINDROW AND METHOD FOR OPERATING A MULTIPLE WINDROW
PROCÉDÉ DE FONCTIONNEMENT D'UN ANDAINEUSE MULTIROTATIVE ET ANDAINEUSE MULTIROTATIVE

(30) Priorität: 08.04.2020 AT 502982020
(43) Veröffentlichungstag der Anmeldung: 13.10.2021
(73) Patentinhaber: Pöttinger Landtechnik GmbH, 4710 Grieskirchen (AT)
(72) Erfinder: EDELBAUER, Roland, 4710 Grieskirchen (AT); JUNGREITHMAYER, Martin, 4710 Grieskirchen (AT); SCHIMPF, Sebastian, 4710 Grieskirchen (AT); KLEESADL, Gerhard, 4710 Grieskirchen (AT)
(74) Vertreter: Burger, Hannes

(56) Entgegenhaltungen:
- EP-A1- 1 433 372
- EP-A1- 3 254 553
- DE-A1- 19 603 400
- DE-U1-202009 004 721
- DE-U1-202009 004 721

## Beschreibung

Die Erfindung betrifft ein Verfahren zum Betreiben eines Mehrkreiselschwaders, sowie einen Mehrkreiselschwader.

Bei der Futterernte ist es üblich, das Erntegut, wie etwa bereits gemähtes Gras, mithilfe einer landwirtschaftlichen Maschine durch eine Arbeitsgerätekombination aus einem Zugfahrzeug und einem Schwader zu bearbeiten. Dabei wird das Erntegut vom Schwader als Schwad auf der landwirtschaftlichen Nutzfläche abgelegt, um diese mit einem Ladewagen aufnehmen und abtransportieren zu können. Der Schwader kann beispielsweise mehrere Rechkreisel aufweisen, welche zum Rechen des Erntegutes zur Schwad dienen. Beispielsweise umfassen die Rechkreisel jeweils einen Kreiselkopf und mehrere umfänglich daran angeordnete Zinkenarme. Von den Enden der Zinkenarme stehen jeweils mehrere Zinken zum Boden hin ab. Durch die Drehbewegung der Rechkreisel wird das auf der landwirtschaftlichen Nutzfläche verteilte Erntegut zum Schwad zusammengerecht. Der Vorgang dieses Zusammenrechens wird üblicherweise als Schwaden bezeichnet.

Üblicherweise sind bei derartigen Schwadern mit mehreren Rechkreiseln diese jeweils unabhängig voneinander anhebbar und absenkbar, um sie entweder in eine Hubstellung oder in einer Arbeitsstellung Eingriff mit dem Erntegut zu bringen. Dadurch ist es möglich, die Rechkreisel entweder zur Bearbeitung abzusenken oder in einem bereits bearbeiteten Feldbereich, beispielsweise im Vorgewende, in die Hubstellung anzuheben, so dass der dort bereits abgelegte Schwad nicht beeinträchtigt wird.

Die EP2547188B1 offenbart ein Verfahren zum Betreiben eines Vierkreiselschwaders mit einem rechten vorderen Rechkreisel, einem rechten hinteren Rechkreisel, einem linken vorderen Rechkreisel und einem linken hinteren Rechkreisel, wobei bei spitzförmigen Feldbereichen durch Erfassung einer Vorgewendegrenzlinie zwischen der zu bearbeitenden Fläche und einem Vorgewende ein Vorgewendewinkel der Vorgewendegrenzlinie berechnet wird. Durch Berücksichtigung der zurückgelegten Wegstrecke und des erfassten Vorgewendewinkels der Vorgewendegrenzlinie wird von einer Steuerung automatisiert ein Hebevorgang für die rechten Rechkreisel und für die linken Rechkreisel gestartet.

Das aus der EP2547188B1 bekannte Verfahren weist den Nachteil auf, dass aufgrund dessen Komplexität eine Vielzahl von Sensoren notwendig ist, welche zur Erfassung der Grenzlinie dient. Derartige Sensoren sind fehleranfällig bzw. können diese im rauen Arbeitseinsatz verschmutzen und dadurch die Grenzlinie oft nur unzureichend genau oder gar nicht erfassen. Dies führt zu unzureichenden Ergebnissen der Schwadbildung bzw. zu Zeitverzögerungen und im schlimmsten Fall sogar zu Ernteausfällen.

Die DE 19603400 A1 offenbart einen Zweikreiselschwader mit einer Steuerung zur zeitlich versetzten automatisierten Handhabe eines vorderen Rechkreisels und eines hinteren Rechkreisels.

Aufgabe der vorliegenden Erfindung war es, die Nachteile des Standes der Technik zu überwinden und ein verbessertes Verfahren zum Betreiben eines Mehrkreiselschwaders, sowie einen verbesserten Mehrkreiselschwader zur Verfügung zu stellen.

Diese Aufgabe wird durch ein Verfahren und eine Vorrichtung gemäß den Ansprüchen gelöst.

Erfindungsgemäß ist ein Verfahren zum Betreiben eines Mehrkreiselschwaders vorgesehen. Der Mehrkreiselschwader umfasst:
- einem Tragrahmen und daran angeordnet zumindest ein linkes Laufrad und zumindest ein rechtes Laufrad;
- einen in einer Arbeitsfahrtrichtung rechten vorderen Rechkreisel, welcher mittels eines ersten Hubaktors zwischen einer Arbeitsstellung und einer Hubstellung verstellbar ist;
- einen in der Arbeitsfahrtrichtung rechten hinteren Rechkreisel, welcher mittels eines zweiten Hubaktors zwischen einer Arbeitsstellung und einer Hubstellung verstellbar ist;
- einen in der Arbeitsfahrtrichtung linken vorderen Rechkreisel, welcher mittels eines dritten Hubaktors zwischen einer Arbeitsstellung und einer Hubstellung verstellbar ist;
- einen in der Arbeitsfahrtrichtung linken hinteren Rechkreisel, welcher mittels eines vierten Hubaktors zwischen einer Arbeitsstellung und einer Hubstellung verstellbar ist;
- einer Steuerung, welche zur Steuerung der Hubaktoren ausgebildet ist;
- eine Bedienerschnittstelle zum Eingeben von Eingabebefehlen, wobei die Bedienerschnittstelle mit der Steuerung gekoppelt ist,

Das Verfahren umfasst die Verfahrensschritte:
- Schwaden von Erntegut, wobei sich alle vier Rechkreisel in deren Arbeitsstellung befinden;
- Aktivieren eines Hubvorganges zum Überführen der beiden rechten Rechkreisel in die Hubstellung, wobei der Hubvorgang durch einen ersten Eingabebefehl gestartet wird, welcher durch einen Maschinenbediener eingegeben wird, und wobei in einem ersten Schritt der rechte vordere Rechkreisel in die Hubstellung überführt wird und mit einem Verzögerungswert zum ersten Schritt der rechte hintere Rechkreisel in die Hubstellung überführt wird;
- Aktivieren eines Hubvorganges zum Überführen der beiden linken Rechkreisel in die Hubstellung, wobei der Hubvorgang durch einen zweiten Eingabebefehl gestartet wird, welcher durch den Maschinenbediener eingegeben wird, und wobei in einem zweiten Schritt der linke vordere Rechkreisel in die Hubstellung überführt wird und mit einem Verzögerungswert zum zweiten Schritt der linke hintere Rechkreisel in die Hubstellung überführt wird.

Erfindungsgemäß ist ein Verfahren zum Betreiben eines Mehrkreiselschwaders vorgesehen. Das Verfahren umfasst die Verfahrensschritte:
- Schwaden von Erntegut, wobei sich alle vier Rechkreisel in deren Arbeitsstellung befinden;
- Aktivieren eines Hubvorganges zum Überführen der beiden linken Rechkreisel in die Hubstellung, wobei der Hubvorgang durch einen ersten Eingabebefehl gestartet wird, welcher durch den Maschinenbediener eingegeben wird, und wobei in einem ersten Schritt der linke vordere Rechkreisel in die Hubstellung überführt wird und mit einem Verzögerungswert zum ersten Schritt der linke hintere Rechkreisel in die Hubstellung überführt wird;
- Aktivieren eines Hubvorganges zum Überführen der beiden rechten Rechkreisel in die Hubstellung, wobei der Hubvorgang durch einen zweiten Eingabebefehl gestartet wird, welcher durch einen Maschinenbediener eingegeben wird, und wobei in einem zweiten Schritt der rechte vordere Rechkreisel in die Hubstellung überführt wird und mit einem Verzögerungswert zum zweiten Schritt der rechte hintere Rechkreisel in die Hubstellung überführt wird.

Das Wesentliche Merkmal des Erfindungsgemäßen Verfahrens ist das aufeinanderfolgende Aktivieren des Hubvorganges zum Überführen der beiden rechten Rechkreisel in die Hubstellung und Aktivieren des Hubvorganges zum Überführen der beiden linken Rechkreisel in die Hubstellung oder umgekehrt jeweils durch einen bewussten Eingabebefehl durch den Maschinenbediener. Hierbei ist es situationsabhängig, ob zuerst der Hubvorgang für die beiden rechten Rechkreisel oder der Hubvorgang für die beiden linken Rechkreisel aktiviert wird. Insbesondere die Lage des Vorgewendes wird wesentlichen Einfluss darauf nehmen, ob zuerst der Hubvorgang für die beiden rechten Rechkreisel oder der Hubvorgang für die beiden linken Rechkreisel aktiviert wird.

Das erfindungsgemäße Verfahren bringt den Vorteil mit sich, dass die Steuerung des Mehrkreiselschwaders möglichst einfach gehalten werden kann und darüber hinaus nur eine möglichst geringe Anzahl an Sensoren benötigt wird, um das erfindungsgemäße Verfahren durchzuführen. Somit kann die Fehleranfälligkeit des Mehrkreiselschwaders reduziert werden, wodurch die Ausbeute bei der Futterernte verbessert werden kann.

Ferner kann vorgesehen sein, dass die Berechnung des Verzögerungswertes werksseitig vorgegeben ist und vom Maschinenbediener mittels Einstellparameter veränderbar ist. Dies bringt den Vorteil mit sich, dass der Maschinenbediener den Verzögerungswert an die Gegebenheiten des Feldes, insbesondere an den aktuell vorliegenden Vorgewendewinkel anpassen kann.

Alternativ dazu kann vorgesehen sein, dass die Berechnung des Verzögerungswertes werksseitig vorgegeben ist und vom Maschinenbediener nicht veränderbar ist. Dies bringt den Vorteil mit sich, dass werkseitig ein Verzögerungswert festgelegt wird, welcher für einen großen Winkelbereich eines Vorgewendewinkels bzw. für die am häufigsten auftretenden Vorgewendewinkel festgelegt wird. Dadurch kann die Bedienung des Mehrkreiselschwaders möglichst vereinfacht werden. Darüber hinaus kann durch diese Maßnahme verhindert werden, dass durch den Maschinenbediener Fehleinstellungen vorgenommen werden.

Darüber hinaus kann vorgesehen sein, dass der erste Eingabebefehl durch Betätigung eines ersten Eingabetasters an der Bedienerschnittstelle erfolgt und dass der zweite Eingabebefehl durch Betätigung eines zweiten Eingabetasters an der Bedienerschnittstelle erfolgt. Dies bringt den Vorteil mit sich, dass der erste Eingabebefehl oder der zweite Eingabebefehl möglichst einfach eingegeben werden können, wodurch die Steuerung des Mehrkreiselschwaders möglichst vereinfacht wird.

Vorteilhaft ist auch eine Ausprägung, gemäß welcher vorgesehen sein kann, dass der erste Eingabetaster und der zweite Eingabetaster baulich voneinander beabstandet an der Bedienerschnittstelle angeordnet sind. Dies bringt den Vorteil mit sich, dass der Maschinenbediener intuitiv auf den richtigen Eingabetaster zugreifen kann, wodurch die richtige Befehlseingabe erleichtert wird.

Insbesondere kann vorgesehen sein, dass jener Eingabetaster, welcher zum Starten des Hubvorganges zum Überführen der beiden rechten Rechkreisel in die Hubstellung dient, auch rechts an der Bedienerschnittstelle angeordnet ist und das jener Eingabetaster, welcher zum Aktivieren des Hubvorganges zum Überführen der beiden linken Rechkreisel in die Hubstellung dient, an einer linken Seite der Bedienerschnittstelle angeordnet ist.

Gemäß einer Weiterbildung ist es möglich, dass die Berechnung des Verzögerungswertes durch eine Wegberechnung aus einer Wegmessung mittels eines Wegmesssensors erfolgt. Dies bringt den Vorteil mit sich, dass der Verzögerungswert die tatsächliche Position des Mehrkreiselschwaders wiederspiegelt und durch exakte Kenntnis der Geometrie des Mehrkreiselschwaders der Startzeitpunkt zum Heben der hinteren Rechkreisel exakt getroffen werden kann.

Ferner kann es zweckmäßig sein, wenn die Berechnung des Verzögerungswertes unter Berücksichtigung einer Fahrgeschwindigkeit und unter Berücksichtigung des Ansprechverhaltens der Steuerung und des Ansprechverhaltens der Hubaktoren erfolgt. Dies bringt den Vorteil mit sich, dass die Trägheit der Steuerung bzw. die Trägheit der Hubaktoren berücksichtigt werden können, um ein exaktes Anhebeverhalten der hinteren Rechkreisel zu erreichen. Insbesondere bei einem hydraulischen System, in dem die Hubaktoren als Hydraulikzylinder ausgebildet sind, ist diese Maßnahme von Vorteil, um die Trägheit eines derartigen Systems auszugleichen.

Darüber hinaus kann vorgesehen sein, dass die Berechnung des Verzögerungswertes für die linken Rechkreisel und die rechten Rechkreisel gesondert erfolgt. Dies bringt besonders dann Vorteile mit sich, wenn im Bereich vor der Vorgewendegrenzlinie eine Kurve gefahren wird und somit die linken Rechkreisel im selben Zeitraum eine größere oder kleinere Wegstrecke zurücklegen als die rechten Rechkreisel.

Weiters kann vorgesehen sein, dass die gesonderte Berechnung des Verzögerungswertes für die linken Rechkreisel und die rechten Rechkreisel dadurch erfolgt, dass an einem der linken Laufräder ein linker Wegmesssensor in Form eines Drehsensors ausgebildet ist, mittels welchem die Wegberechnung der linken Rechkreisel erfolgt und dass an einem der rechten Laufräder ein rechter Wegmesssensor in Form eines Drehsensors ausgebildet ist, mittels welchem die Wegberechnung der rechten Rechkreisel erfolgt. Dies bringt den Vorteil mit sich, dass die unterschiedlichen Wegstrecken der linken Rechkreisel und der rechten Rechkreisel möglichst einfach und exakt berechnet werden können.

In einer alternativen Ausführungsvariante kann vorgesehen sein, dass die gesonderte Berechnung des Verzögerungswertes für die linken Rechkreisel und die rechten Rechkreisel dadurch erfolgt, dass an einem der Laufräder ein Wegmesssensor in Form eines Drehsensors ausgebildet ist und dass ein Winkelsensor ausgebildet ist, mittels welchem ein Knickwinkel eines Zugfahrzeuges relativ zum Tragrahmen ermittelt wird, wobei durch Berücksichtigung der Erfassungswerte des Wegmesssensors und des Winkelsensors die Wegberechnung der linken Rechkreisel und der rechten Rechkreisel gesondert erfolgt. Dies bringt den Vorteil mit sich, dass die unterschiedlichen Wegstrecken der linken Rechkreisel und der rechten Rechkreisel möglichst einfach und exakt berechnet werden können.

In wieder einer anderen Ausführungsvariante kann auch vorgesehen sein, dass die gesonderte Berechnung des Verzögerungswertes für die linken Rechkreisel und die rechten Rechkreisel dadurch erfolgt, dass an einem der Laufräder ein Wegmesssensor in Form eines Drehsensors ausgebildet ist und dass ein Lenkwinkel des Zugfahrzeuges ermittelt wird und zur Berechnung des Verzögerungswertes für die linken Rechkreisel und die rechten Rechkreisel herangezogen wird.

Analog zu den obig beschriebenen Ausführungen kann auch ein Verfahren zum Betreiben eines Mehrkreiselschwaders vorgesehen sein, welches folgende Verfahrensschritte umfasst:
- Befahren des Vorgewendes, wobei sich alle vier Rechkreisel in deren Hubstellung befinden;
- Aktivieren eines Senkvorganges zum Überführen der beiden rechten Rechkreisel in die Arbeitsstellung, wobei der Senkvorgang durch einen ersten Eingabebefehl gestartet wird, welcher durch einen Maschinenbediener eingegeben wird, und wobei in einem ersten Schritt der rechte vordere Rechkreisel in die Arbeitsstellung überführt wird und mit einem Verzögerungswert zum ersten Schritt der rechte hintere Rechkreisel in die Arbeitsstellung überführt wird;
- Aktivieren eines Senkvorganges zum Überführen der beiden linken Rechkreisel in die Arbeitsstellung, wobei der Senkvorgang durch einen zweiten Eingabebefehl gestartet wird, welcher durch den Maschinenbediener eingegeben wird, und wobei in einem zweiten Schritt der linke vordere Rechkreisel in die Arbeitsstellung überführt wird und mit einem Verzögerungswert zum zweiten Schritt der linke hintere Rechkreisel in die Arbeitsstellung überführt wird.

Analog zu den obig beschriebenen Ausführungen kann auch ein Verfahren zum Betreiben eines Mehrkreiselschwaders vorgesehen sein, welches folgende Verfahrensschritte umfasst:
- Befahren des Vorgewendes, wobei sich alle vier Rechkreisel in deren Hubstellung befinden;
- Aktivieren eines Senkvorganges zum Überführen der beiden linken Rechkreisel in die Arbeitsstellung, wobei der Senkvorgang durch einen ersten Eingabebefehl gestartet wird, welcher durch den Maschinenbediener eingegeben wird, und wobei in einem ersten Schritt der linke vordere Rechkreisel in die Arbeitsstellung überführt wird und mit einem Verzögerungswert zum ersten Schritt der linke hintere Rechkreisel in die Arbeitsstellung überführt wird;
- Aktivieren eines Senkvorganges zum Überführen der beiden rechten Rechkreisel in die Arbeitsstellung, wobei der Senkvorgang durch einen zweiten Eingabebefehl gestartet wird, welcher durch einen Maschinenbediener eingegeben wird, und wobei in einem zweiten Schritt der rechte vordere Rechkreisel in die Arbeitsstellung überführt wird und mit einem Verzögerungswert zum zweiten Schritt der rechte hintere Rechkreisel in die Arbeitsstellung überführt wird.

Erfindungsgemäß ist ein Mehrkreiselschwader ausgebildet, welcher folgende Bauteile umfasst:
- einem Tragrahmen und daran angeordnet zumindest ein linkes Laufrad und zumindest ein rechtes Laufrad;
- einen in einer Arbeitsfahrtrichtung rechten vorderen Rechkreisel, welcher mittels eines ersten Hubaktors zwischen einer Arbeitsstellung und einer Hubstellung verstellbar ist;
- einen in der Arbeitsfahrtrichtung rechten hinteren Rechkreisel, welcher mittels eines zweiten Hubaktors zwischen einer Arbeitsstellung und einer Hubstellung verstellbar ist;
- einen in der Arbeitsfahrtrichtung linken vorderen Rechkreisel, welcher mittels eines dritten Hubaktors zwischen einer Arbeitsstellung und einer Hubstellung verstellbar ist;
- einen in der Arbeitsfahrtrichtung linken hinteren Rechkreisel, welcher mittels eines vierten Hubaktors zwischen einer Arbeitsstellung und einer Hubstellung verstellbar ist;
- einer Steuerung zur Steuerung der Hubaktoren.

Die Steuerung ist zum Durchführen des obig beschriebenen Verfahrens ausgebildet bzw. umfasst die Steuerung Befehle zum Durchführen des obig beschriebenen Verfahrens.

Erfindungsgemäß ist auch ein Computerprogramm ausgebildet, welches Befehle umfasst, die bei der Ausführung des Programms durch eine Steuerung, diese veranlassen, die Schritte des obig beschriebenen Verfahrens durchzuführen.

Erfindungsgemäß ist ein Computerlesbares Speichermedium ausgebildet, welches Befehle umfasst, die bei der Ausführung durch eine Steuerung diese veranlassen, die Schritte des obig beschriebenen Verfahrens durchzuführen.

Das Geben eines Eingabebefehls im Sinne dieses Dokumentes kann die Betätigung eines Eingabetasters sein, wobei für den ersten Eingabebefehl ein erster Eingabetaster vorgesehen sein kann und für den zweiten Eingabebefehl ein zweiter Eingabetaster vorgesehen sein kann.

Die Bedienerschnittstelle im Sinne dieses Dokumentes kann beispielsweise ein Bedienpult, einen Joystick oder dergleichen umfassen, welche physische Eingabemittel, wie etwa Eingabetaster aufweisen. Die Bedienerschnittstelle im Sinne dieses Dokumentes kann beispielsweise auch einen Touch-screen umfassen. Die Bedienerschnittstelle im Sinne dieses Dokumentes kann beispielsweise auch auditive Sensoren zur mündlichen Befehlseingabe umfassen. Die Bedienerschnittstelle im Sinne dieses Dokumentes kann beispielsweise auch optische Sensoren zur Gesteneingabe umfassen. Die Bedienerschnittstelle im Sinne dieses Dokumentes kann beispielsweise auch Elektroden zum Messen von Hirnströmen des Maschinenbedieners umfassen. Natürlich ist es auch denkbar, dass die Bedienerschnittstelle eine Kombination aus den obig beschriebenen Einheiten umfasst.

Der Eingabetaster im Sinne dieses Dokumentes kann ein physischer Eingabetaster sein, welcher beispielsweise an einem Bedienpult oder einem Joystick angeordnet sein kann. Als Eingabetaster im Sinne dieses Dokumentes kann auch ein virtueller Befehlsknopf verstanden werden, welcher beispielsweise an einem Touch-screen eingeblendet werden kann.

Das Geben des Eingabebefehls im Sinne dieses Dokumentes kann auch durch ein sonstiges Mittel zur Erfassung des Willen des Maschinenbedieners erfasst werden. Dies kann etwa eine Gestensteuerung, eine akustische Steuerung, Eine Steuerung durch Messen von Hirnströmen oder eine sonstige Steuerung sein.

Ein Mehrkreiselschwader im Sinne dieses Dokumentes ist ein Schwader, welcher zumindest vier Rechkreisel aufweist. Ein Mehrkreiselschwader mit vier Rechkreisel wird als Vierkreiselschwader bezeichnet. Als Mehrkreiselschwader im Sinne dieses Dokumentes wird auch ein Schwader mit mehr als vier Rechkreisel, beispielsweise sechs Rechkreisel, acht Rechkreisel usw. bezeichnet.

Das erfindungsgemäße Verfahren ist in den Ausführungsbeispielen anhand eines Vierkreiselschwaders beschrieben. Bei einem Sechskreiselschwader oder einem sonstigen Mehrkreiselschwader sind zusätzlich zu den in den Ausführungsbeispielen beschriebenen vier Rechkreisel, weitere Rechkreiselpaare vorhanden, wobei das verzögerte Anheben dieser zusätzlichen Rechkreisel mutatis mutandis zu den beschriebenen Ausführungsbeispielen erfolgt.

Zum besseren Verständnis der Erfindung wird diese anhand der nachfolgenden Figuren näher erläutert.

Es zeigen jeweils in stark vereinfachter, schematischer Darstellung:
- Fig. 1: eine Draufsicht auf ein erstes Ausführungsbeispiel eines Vierkreiselschwaders mit einem Zugfahrzeug;
- Fig. 2: ein erstes Ausführungsbeispiel einer Bedienerschnittstelle;
- Fig. 3: ein erstes Ausführungsbeispiel einer Planung zur Bearbeitung eines Feldausschnittes;
- Fig. 4: ein Ausführungsbeispiel einer Abfolge des Verfahrens zum Anheben der einzelnen Rechkreisel;
- Fig. 5: ein Ausführungsbeispiel einer Abfolge des Verfahrens zum Absenken der einzelnen Rechkreisel;
- Fig. 6: einen Vierkreiselschwader in einer Kurvenfahrt im Bereich einer Vorgewendegrenzlinie.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

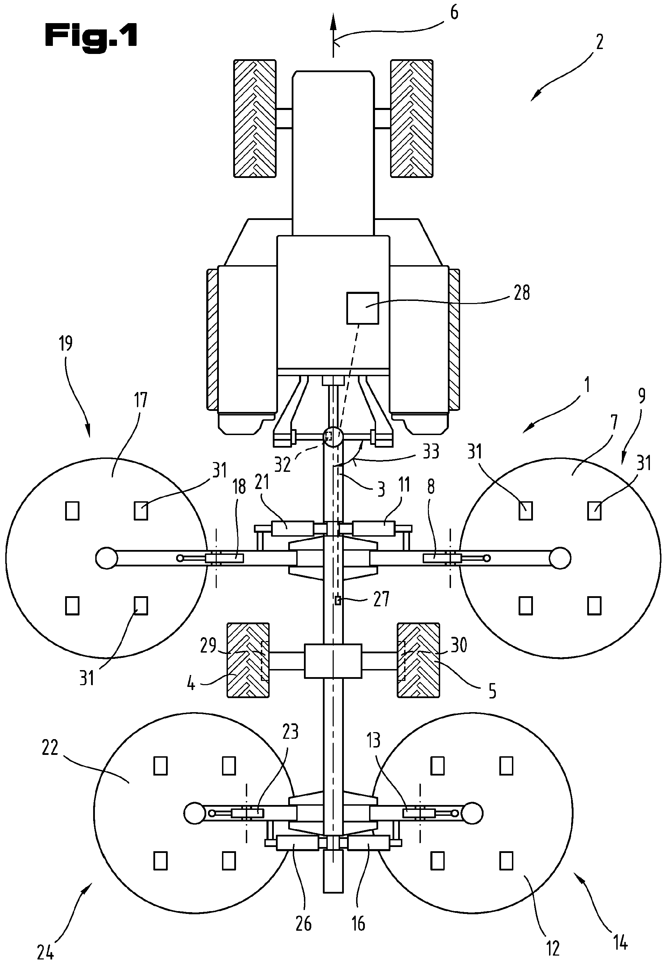

Fig. 1 zeigt in einer Draufsicht eine schematische Darstellung eines Ausführungsbeispiels eines Mehrkreiselschwaders 1 in Form eines Vierkreiselschwaders 1, welcher an ein Zugfahrzeug 2 gekoppelt ist.

Der Vierkreiselschwader 1 umfasst einen Tragrahmen 3 an welchem ein linkes Laufrad 4 und ein rechtes Laufrad 5 angeordnet sind. Im Arbeitsbetrieb wird der Vierkreiselschwader 1 vom Zugfahrzeug 2 in einer Arbeitsfahrtrichtung 6 gezogen.

Der Vierkreiselschwader 1 umfasst einen rechten vorderen Rechkreisel 7, welcher mittels eines ersten Hubaktors 8 zwischen einer Arbeitsstellung 9 und einer Hubstellung 10 verstellbar ist.

Darüber hinaus ist ein erster Ausschubaktor 11 ausgebildet, mittels welchem der rechte vordere Rechkreisel 7 quer zur Arbeitsfahrtrichtung 6 relativ zum Tragrahmen 3 verschiebbar ist, wodurch die Arbeitsbreite des Vierkreiselschwaders 1 verstellbar ist.

Der Vierkreiselschwader 1 umfasst außerdem einen rechten hinteren Rechkreisel 12, welcher mittels eines zweiten Hubaktors 13 zwischen einer Arbeitsstellung 14 und einer Hubstellung 15 verstellbar ist.

Darüber hinaus ist ein zweiter Ausschubaktor 16 ausgebildet, mittels welchem der rechte hintere Rechkreisel 12 quer zur Arbeitsfahrtrichtung 6 relativ zum Tragrahmen 3 verschiebbar ist.

Der Vierkreiselschwader 1 umfasst außerdem einen linken vorderen Rechkreisel 17, welcher mittels eines dritten Hubaktors 18 zwischen einer Arbeitsstellung 19 und einer Hubstellung 20 verstellbar ist.

Darüber hinaus ist ein dritter Ausschubaktor 21 ausgebildet, mittels welchem der linke vordere Rechkreisel 17 quer zur Arbeitsfahrtrichtung 6 relativ zum Tragrahmen 3 verschiebbar ist.

Der Vierkreiselschwader 1 umfasst außerdem einen linken hinteren Rechkreisel 22, welcher mittels eines vierten Hubaktors 23 zwischen einer Arbeitsstellung 24 und einer Hubstellung 25 verstellbar ist.

Darüber hinaus ist ein vierter Ausschubaktor 26 ausgebildet, mittels welchem der linke hintere Rechkreisel 22 quer zur Arbeitsfahrtrichtung 6 relativ zum Tragrahmen 3 verschiebbar ist.

Der Vierkreiselschwader 1 umfasst darüber hinaus eine Steuerung 27, welche zum Ansteuern der Hubaktoren 8, 13, 18, 23 bzw. der Ausschubaktoren 11, 16, 21, 26 dient. Die Steuerung 27 ist mit einer Bedienerschnittstelle 28 gekoppelt, welche zum Eingeben von Befehlen in die Steuerung 27 dient. Die Steuerung 27 kann entweder am Zugfahrzeug 2 oder am Vierkreiselschwader 1 angeordnet sein. Die Bedienerschnittstelle 28 ist vorzugsweise im Zugfahrzeug 2 angeordnet.

In einer ersten Ausführungsvariante ist es denkbar, dass die Steuerung 27 und/oder die Bedienerschnittstelle 28 eigens für den Vierkreiselschwader 1 ausgebildet sind und somit integraler Bestandteil des Vierkreiselschwaders 1 sind. In einer weiteren Ausführungsvariante ist es auch denkbar, dass die Steuerung 27 und/oder die Bedienerschnittstelle 28 integraler Bestandteil des Zugfahrzeuges 2 sind und der Vierkreiselschwader 1 mittels einer genormten Datenverbindungsschnittstelle, wie etwa einem ISOBUS entsprechend der Norm ISO 11783 mit dem Zugfahrzeug 2 gekoppelt ist.

Weiters kann vorgesehen sein, dass der Vierkreiselschwader 1 einen linken Wegmesssensor 29 umfasst und einen rechten Wegmesssensor 30 umfasst. Wie aus Fig. 1 ersichtlich, kann vorgesehen sein, dass die Wegmesssensoren 29, 30 mit den Laufrädern 4, 5 gekoppelt sind. In einer alternativen Ausführungsvariante ist es auch denkbar, dass die Wegmesssensoren 29, 30 mit einem Stützrad 31 des jeweiligen Rechkreisels 7, 12, 17, 22 gekoppelt sind. In wieder einer anderen Ausführungsvariante ist es natürlich auch denkbar, dass die Wegmesssensoren 29, 30 mit eigens dafür ausgebildeten linken bzw. rechten Tasträdern gekoppelt sind.

Weiters kann vorgesehen sein, dass der Vierkreiselschwader 1 einen Winkelsensor 32 umfasst, mittels welchem ein Knickwinkel 33 des Zugfahrzeuges 2 relativ zum Tragrahmen 3 erfasst werden kann.

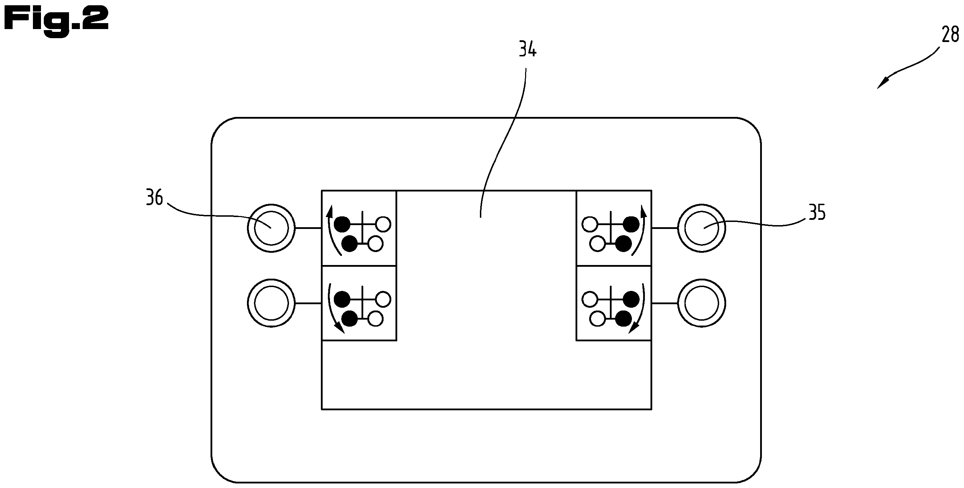

Fig. 2 zeigt ein erstes Ausführungsbeispiel der Bedienerschnittstelle 28. Wie aus Fig. 2 ersichtlich, kann vorgesehen sein, dass die Bedienerschnittstelle 28 ein Grafikdisplay 34 umfasst, welches zur Anzeige von Informationen dient. Weiters kann auch vorgesehen sein, dass das Grafikdisplay 34 in Form eines Touchdisplay ausgebildet ist und somit gleichzeitig zur Eingabe von Informationen in die Bedienerschnittstelle 28 dient. Weiters kann vorgesehen sein, dass die Bedienerschnittstelle 28 einen ersten Eingabetaster 35 und einen zweiten Eingabetaster 36 umfasst, welche zum Eingeben von Befehlen in die Bedienerschnittstelle 28 dienen.

Der erste Eingabetaster 35 und der zweite Eingabetaster 36 können in Form eines Softkeys ausgebildet sein, welche am Grafikdisplay 34 dargestellten Piktogrammen zugeordnet sein können. Somit ist es denkbar, dass für jeweilig auswählbare Eingabebefehle den Eingabetastern 35, 36 eine unterschiedliche Funktion zugeordnet werden kann.

Wie aus Fig. 2 ersichtlich, kann vorgesehen sein, dass der rechts angeordnete Eingabetaster 35, zum Starten eines Hubvorganges der rechten Rechkreisel 7, 12, dienen kann.

Wie aus Fig. 2 weiters ersichtlich, kann vorgesehen sein, dass der links angeordnete Eingabetaster 36, zum Starten eines Hubvorganges der linken Rechkreisel 17, 22, dienen kann.

Analog dazu können weitere Eingabetaster ausgebildet sein, welche zum sequentiellen Starten eines Senkvorganges der einzelnen Rechkreisel 7, 12, 17, 22 eingesetzt werden können.

Weiters kann vorgesehen sein, dass ein weiterer Eingabetaster ausgebildet ist, mittels welchem der Hubvorgang für die rechten Rechkreisel 7, 12 und die linken Rechkreisel 17, 22 gleichzeitig gestartet werden kann. Hierbei kann vorgesehen sein, dass jeweils die vorderen Rechkreisel 7, 17 zuerst angehoben werden und mit gleichem Verzögerungswert bei Geradeausfahrt und mit unterschiedlichem Verzögerungswert bei Kurvenfahrt die hinteren Rechkreisel 12, 22 angehoben werden.

Analog dazu kann natürlich auch vorgesehen sein, dass ein weiterer Eingabetaster ausgebildet ist, mittels welchem der Senkvorgang für die rechten Rechkreisel 7, 12 und die linken Rechkreisel 17, 22 gleichzeitig gestartet werden kann.

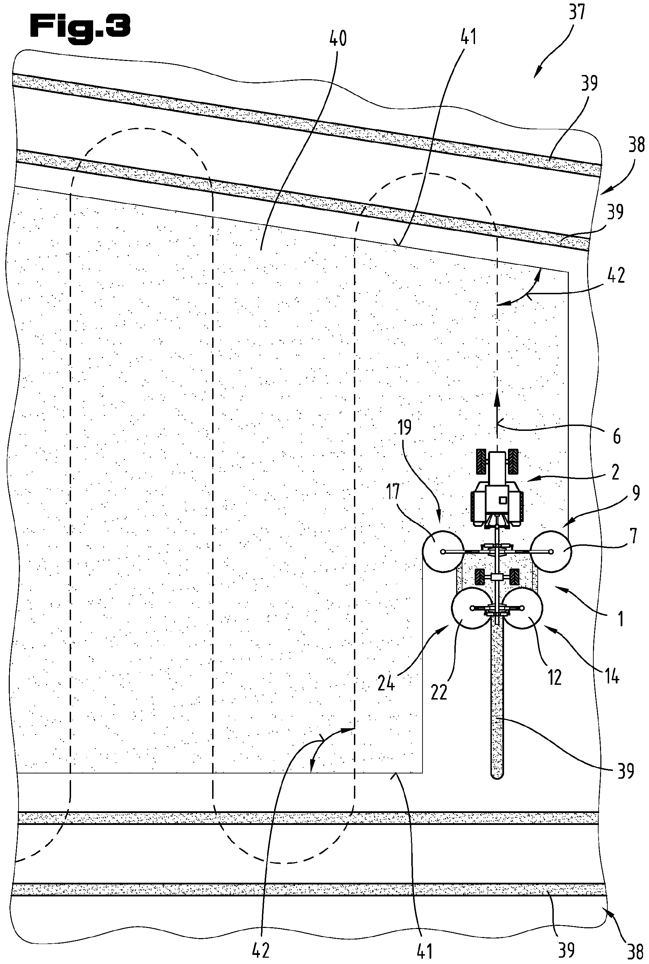

Fig. 3 zeigt in einer Draufsicht eine schematische Darstellung der möglichen Arbeitsplanung zum Schwaden eines Feldes 37. Wie aus Fig. 3 ersichtlich, kann vorgesehen sein, dass zuerst in den Randabschnitten des Feldes 37 ein Vorgewende 38 erstellt wird, wobei das Vorgewende 38 zumindest eine Schwad 39 aufweist. Somit kann mit dem Vorgewende 38 am Feld 37 genügend Platz geschaffen werden, um das Zugfahrzeug 2 mitsamt dem Vierkreiselschwader 1 wenden zu können.

Die Grenze zwischen dem Vorgewende 38 und dem erst zu bearbeitenden Erntegut 40 wird in diesem Dokument als Vorgewendegrenzlinie 41 bezeichnet. Die Vorgewendegrenzlinie 41 ist in einem Vorgewendewinkel 42 zur Arbeitsfahrtrichtung 6 angeordnet. Im vorliegenden Ausführungsbeispiel wird der Vorgewendewinkel 42 in Arbeitsfahrtrichtung 6 gesehen, an der rechten Seite gemessen. Somit ergibt sich folgende Situation. Wenn der Vorgewendewinkel 42 kleiner als 90° ist, muss beim Ausfahren des Vierkreiselschwaders 1 in das Vorgewende 38 zuerst der rechte vordere Rechkreisel 7 angehoben werden und erst später der linke vordere Rechkreisel 17 angehoben werden.

Wenn der Vorgewendewinkel 42 größer als 90° ist, muss beim Ausfahren des Vierkreiselschwaders 1 in das Vorgewende 38 zuerst der linke vordere Rechkreisel angehoben werden und erst später der rechte vordere Rechkreisel 7 angehoben werden. Wenn der Vorgewendewinkel 42 gleich 90° ist, müssen der rechte vordere Rechkreisel 7 und der linke vordere Rechkreisel 17 beim Einfahren des Vierkreiselschwaders 1 in das Vorgewende 38 gleichzeitig angehoben werden.

Analog dazu verhält es sich beim Einfahren des Vierkreiselschwaders 1 aus dem Vorgewende 38 heraus in das noch nicht bearbeitete Erntegut 40. Wobei hier die Rechkreisel 7, 17, 12, 22 abgesenkt werden.

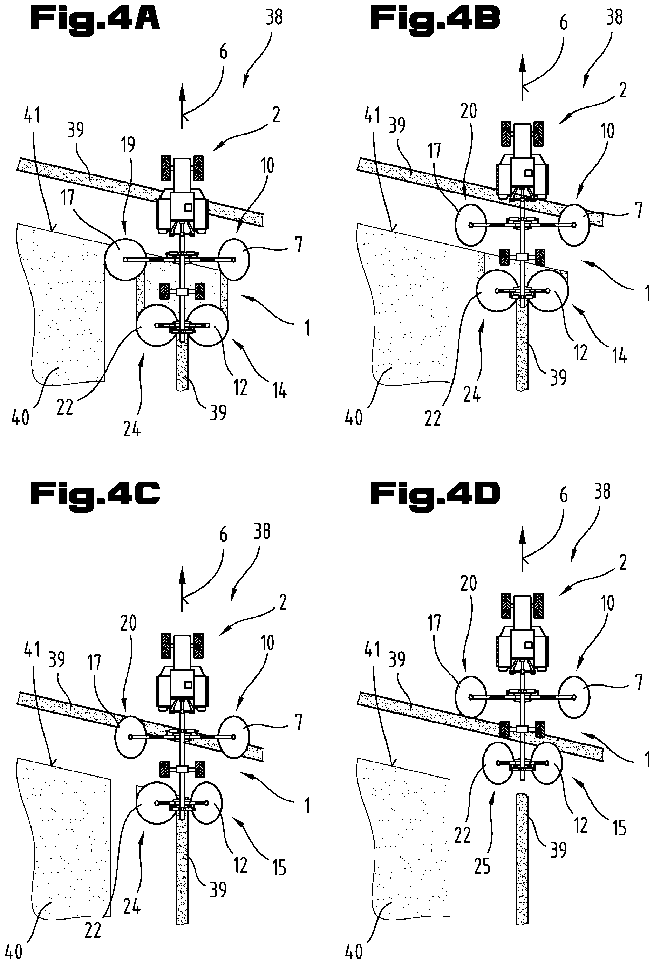

Anhand der Fig. 4A bis 4D wird der Hebevorgang zum Anheben der einzelnen Rechkreisel 7, 12, 17, 22 aus der Arbeitsstellung 9, 14, 19, 24 in die Hubstellung 10, 15, 20, 25 beim Überfahren der Vorgewendegrenzlinie 41 beschrieben.

Wie aus Fig. 4A ersichtlich, wird beim vorliegenden Ausführungsbeispiel in welchem der Vorgewendewinkel 42 kleiner als 90° ist, beim Ausfahren des Vierkreiselschwaders 1 in das Vorgewende 38 zuerst der rechte vordere Rechkreisel 7 angehoben, wobei dies durch einen ersten Eingabebefehl des Maschinenbedieners erfolgt.

Anschließend wird entsprechend der Darstellung aus Fig. 4B der linke vordere Rechkreisel 17 aus der Arbeitsstellung 19 in die Hubstellung 20 überführt, wobei dies ebenfalls durch Auslösen eines Eingabebefehls durch den Maschinenbediener erfolgt.

Entsprechend der Darstellung nach Fig. 4C wird in einem dritten Verfahrensschritt mit einem Verzögerungswert zum Anheben des rechten vorderen Rechkreisels 7 der rechte hintere Rechkreisel 12 von seiner Arbeitsstellung 14 in seine Hubstellung 15 überführt, wobei dies automatisiert mit dem Verzögerungswert erfolgt.

Entsprechend der Darstellung nach Fig. 4D wird in einem vierten Verfahrensschritt mit einem Verzögerungswert zum Anheben des linken vorderen Rechkreisels 17 der linke hintere Rechkreisel 22 von seiner Arbeitsstellung 14 in seine Hubstellung 15 überführt, wobei dies automatisiert dem Verzögerungswert erfolgt.

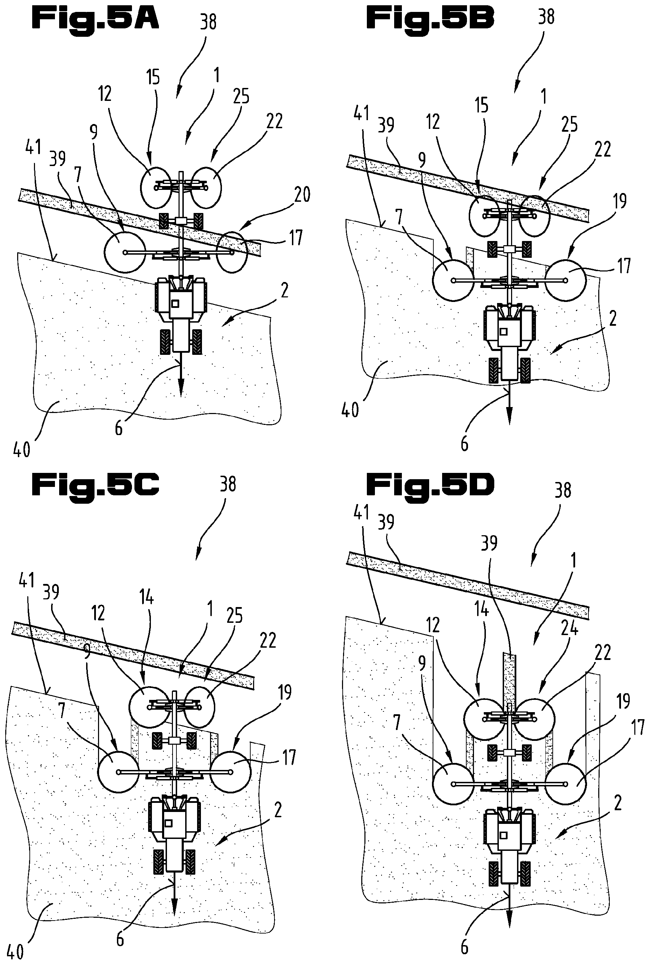

Mutatis mutandis zum Verfahrensablauf nach Fig. 4A bis 4D werden in den Fig. 5A bis 5D die einzelnen Verfahrensschritte zum Absenken der einzelnen Rechkreisel 7, 12, 17, 22 aus der Hubstellung 10, 15, 20, 25 in die Arbeitsstellung 9, 14, 19, 24 beim Einfahren aus dem Vorgewende 38 in das noch nicht bearbeitete Gut 40 beschrieben.

Wie aus Fig. 5A ersichtlich, wird zuerst der rechte vordere Rechkreisel 7 aus der Hubstellung 10 in die Arbeitsstellung 9 überführt, wobei dies durch Eingeben eines ersten Eingabebefehls durch den Maschinenbediener erfolgt.

Anschließend wird entsprechend der Darstellung aus Fig. 5B der linke vordere Rechkreisel 17 aus der Hubstellung 20 in die Arbeitsstellung 19 überführt, wobei dies ebenfalls durch Auslösen eines Eingabebefehls durch den Maschinenbediener erfolgt.

Entsprechend der Darstellung nach Fig. 5C wird in einem dritten Verfahrensschritt mit einem Verzögerungswert zum Absenken des rechten vorderen Rechkreisels 7 der rechte hintere Rechkreisel 12 von seiner Hubstellung 15 in seine Arbeitsstellung 14 überführt, wobei dies automatisiert erfolgt.

Entsprechend der Darstellung nach Fig. 4D wird in einem vierten Verfahrensschritt mit einem Verzögerungswert zum Absenken des linken vorderen Rechkreisels 17 der linke hintere Rechkreisel 22 von seiner Hubstellung 15 in seine Arbeitsstellung 14 überführt, wobei dies automatisiert erfolgt.

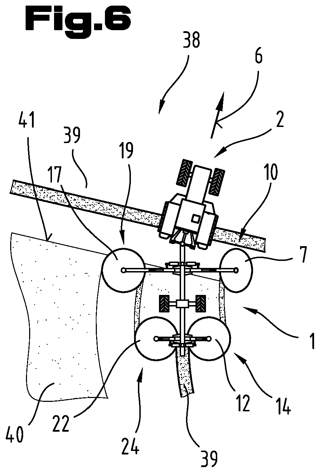

In der Fig. 6 ist eine weitere und gegebenenfalls für sich eigenständige Ausführungsform des Verfahrensablaufes zum Betreiben des Vierkreiselschwaders 1 gezeigt, wobei wiederum für gleiche Teile gleiche Bezugszeichen bzw. Bauteilbezeichnungen wie in der vorangegangenen Fig. 4A verwendet werden. Um unnötige Wiederholungen zu vermeiden, wird auf die detaillierte Beschreibung in der vorangegangenen Fig. 4A hingewiesen bzw. Bezug genommen. Fig. 6 zeigt in einer Draufsicht eine schematische Darstellung des Vierkreiselschwaders 1 mit dem Zugfahrzeug 2, wobei zum Anheben der Rechkreisel 7, 12, 17, 22 von der Arbeitsstellung 9, 14, 19, 24 in die Hubstellung 10, 15, 20, 25 grundsätzlich derselbe Arbeitsablauf wie er in den Fig. 4A bis 4D beschrieben ist, durchgeführt werden kann. Bei einer Kurvenfahrt, wie sie in Fig. 6 dargestellt ist, kann im Verzögerungswert der größere zurückzulegende Weg der kurvenäußeren Rechkreisel, in diesem Fall des linken vorderen Rechkreisels 17 und des linken hinteren Rechkreisels 22 berücksichtigt werden, wobei hier wie eingangs beschrieben die unterschiedlichen Weginformationen der linken Rechkreisel 7, 17 und der rechten Rechkreisel 12, 22 genutzt werden können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Vierkreiselschwader | 24 | Arbeitsstellung linker hinterer Rechkreisel |
| 2 | Zugfahrzeug | 25 | Hubstellung linker hinterer Rech-kreisel |
| 3 | Tragrahmen | | |
| 4 | linkes Laufrad | 26 | vierter Ausschubaktor |
| 5 | rechtes Laufrad | 27 | Steuerung |
| 6 | Arbeitsfahrtrichtung | 28 | Bedienerschnittstelle |
| 7 | rechter vorderer Rechkreisel | 29 | linker Wegmesssensor |
| 8 | erster Hubaktor | 30 | rechter Wegmesssensor |
| 9 | Arbeitsstellung rechter vorderer Rechkreisel | 31 | Stützrad |
| | | 32 | Winkelsensor |
| 10 | Hubstellung rechter vorderer Rechkreisel | 33 | Knickwinkel |
| | | 34 | Grafikdisplay |
| 11 | erster Ausschubaktor | 35 | erster Eingabetaster |
| 12 | rechter hinterer Rechkreisel | 36 | zweiter Eingabetaster |
| 13 | zweiter Hubaktor | 37 | Feld |
| 14 | Arbeitsstellung rechter hinterer Rechkreisel | 38 | Vorgewende |
| | | 39 | Schwad |
| 15 | Hubstellung rechter hinterer Rech-kreisel | 40 | Erntegut |
| | | 41 | Vorgewendegrenzlinie |
| 16 | zweiter Ausschubaktor | 42 | Vorgewendewinkel |
| 17 | linker vorderer Rechkreisel | | |
| 18 | dritter Hubaktor | | |
| 19 | Arbeitsstellung linker vorderer Rechkreisel | | |
| 20 | Hubstellung linker vorderer Rechkreisel | | |
| 21 | dritter Ausschubaktor | | |
| 22 | linker hinterer Rechkreisel | | |
| 23 | vierter Hubaktor | | |

## Patentansprüche

1. Verfahren zum Betreiben eines Mehrkreiselschwaders (1) umfassend:
- einen Tragrahmen (3) und daran angeordnet zumindest ein linkes Laufrad (4) und zumindest ein rechtes Laufrad (5);
- einen in einer Arbeitsfahrtrichtung (6) rechten vorderen Rechkreisel (7), welcher mittels eines ersten Hubaktors (8) zwischen einer Arbeitsstellung (9) und einer Hubstellung (10) verstellbar ist;
- einen in der Arbeitsfahrtrichtung (6) rechten hinteren Rechkreisel (12), welcher mittels eines zweiten Hubaktors (13) zwischen einer Arbeitsstellung (14) und einer Hubstellung (15) verstellbar ist;
- einen in der Arbeitsfahrtrichtung (6) linken vorderen Rechkreisel (17), welcher mittels eines dritten Hubaktors (18) zwischen einer Arbeitsstellung (19) und einer Hubstellung (20) verstellbar ist;
- einen in der Arbeitsfahrtrichtung (6) linken hinteren Rechkreisel (22), welcher mittels eines vierten Hubaktors (23) zwischen einer Arbeitsstellung (24) und einer Hubstellung (25) verstellbar ist;
- eine Steuerung (27), welche zur Steuerung der Hubaktoren (8, 13, 18, 23) ausgebildet ist;
- eine Bedienerschnittstelle (28) zum Eingeben von Eingabebefehlen, wobei die Bedienerschnittstelle (28) mit der Steuerung (27) gekoppelt ist,
**gekennzeichnet durch** die Verfahrensschritte:
- Schwaden von Erntegut (40), wobei sich alle Rechkreisel (7, 12, 17, 22) in deren Arbeitsstellung (9, 14, 19, 24) befinden;
- Aktivieren eines Hubvorganges zum Überführen der rechten Rechkreisel (7, 12) in die Hubstellung (10, 15), wobei der Hubvorgang **durch** einen ersten Eingabebefehl gestartet wird, welcher **durch** einen Maschinenbediener eingegeben wird, und wobei in einem ersten Schritt der rechte vordere Rechkreisel (7) in die Hubstellung (10) überführt wird und mit einem Verzögerungswert zum ersten Schritt der rechte hintere Rechkreisel (12) in die Hubstellung (15) überführt wird;
- Aktivieren eines Hubvorganges zum Überführen der linken Rechkreisel (17, 22) in die Hubstellung (20, 25), wobei der Hubvorgang **durch** einen zweiten Eingabebefehl gestartet wird, welcher **durch** den Maschinenbediener eingegeben wird, und wobei in einem zweiten Schritt der linke vordere Rechkreisel (17) in die Hubstellung (20) überführt wird und mit einem Verzögerungswert zum zweiten Schritt der linke hintere Rechkreisel (22) in die Hubstellung (25) überführt wird.

2. Verfahren zum Betreiben eines Mehrkreiselschwaders (1) umfassend:
- einen Tragrahmen (3) und daran angeordnet zumindest ein linkes Laufrad (4) und zumindest ein rechtes Laufrad (5);
- einen in einer Arbeitsfahrtrichtung (6) rechten vorderen Rechkreisel (7), welcher mittels eines ersten Hubaktors (8) zwischen einer Arbeitsstellung (9) und einer Hubstellung (10) verstellbar ist;
- einen in der Arbeitsfahrtrichtung (6) rechten hinteren Rechkreisel (12), welcher mittels eines zweiten Hubaktors (13) zwischen einer Arbeitsstellung (14) und einer Hubstellung (15) verstellbar ist;
- einen in der Arbeitsfahrtrichtung (6) linken vorderen Rechkreisel (17), welcher mittels eines dritten Hubaktors (18) zwischen einer Arbeitsstellung (19) und einer Hubstellung (20) verstellbar ist;
- einen in der Arbeitsfahrtrichtung (6) linken hinteren Rechkreisel (22), welcher mittels eines vierten Hubaktors (23) zwischen einer Arbeitsstellung (24) und einer Hubstellung (25) verstellbar ist;
- eine Steuerung (27), welche zur Steuerung der Hubaktoren (8, 13, 18, 23) ausgebildet ist;
- eine Bedienerschnittstelle (28) zum Eingeben von Eingabebefehlen, wobei die Bedienerschnittstelle (28) mit der Steuerung (27) gekoppelt ist, **gekennzeichnet durch** die Verfahrensschritte:
- Schwaden von Erntegut (40), wobei sich alle Rechkreisel (7, 12, 17, 22) in deren Arbeitsstellung (9, 14, 19, 24) befinden;
- Aktivieren eines Hubvorganges zum Überführen der linken Rechkreisel (17, 22) in die Hubstellung (20, 25), wobei der Hubvorgang **durch** einen ersten Eingabebefehl gestartet wird, welcher **durch** den Maschinenbediener eingegeben wird, und wobei in einem ersten Schritt der linke vordere Rechkreisel (17) in die Hubstellung (20) überführt wird und mit einem Verzögerungswert der linke hintere Rechkreisel (22) in die Hubstellung (25) überführt wird;
- Aktivieren eines Hubvorganges zum Überführen der rechten Rechkreisel (7, 12) in die Hubstellung (10, 15), wobei der Hubvorgang **durch** einen zweiten Eingabebefehl gestartet wird, welcher **durch** einen Maschinenbediener eingegeben wird, und wobei in einem ersten Schritt der rechte vordere Rechkreisel (7) in die Hubstellung (10) überführt wird und mit einem Verzögerungswert der rechte hintere Rechkreisel (12) in die Hubstellung (15) überführt wird.

3. Verfahren nach Anspruch 1 oder 2, **dadurch gekennzeichnet, dass** die Berechnung des Verzögerungswertes werksseitig vorgegeben ist und vom Maschinenbediener nicht veränderbar ist.

4. Verfahren nach Anspruch 1 oder 2, **dadurch gekennzeichnet, dass** die Berechnung des Verzögerungswertes werksseitig vorgegeben ist und vom Maschinenbediener mittels Einstellparameter veränderbar ist.

5. Verfahren nach einem der vorhergehenden Ansprüche, **dadurch gekennzeichnet, dass** der erste Eingabebefehl durch Betätigung eines ersten Eingabetasters (35) an der Bedienerschnittstelle (28) erfolgt und dass der zweite Eingabebefehl durch Betätigung eines zweiten Eingabetasters (36) an der Bedienerschnittstelle (28) erfolgt.

6. Verfahren nach Anspruch 5, **dadurch gekennzeichnet, dass** der erste Eingabetaster (35) und der zweite Eingabetaster (36) baulich voneinander beabstandet an der Bedienerschnittstelle (28) angeordnet sind.

7. Verfahren nach einem der vorhergehenden Ansprüche, **dadurch gekennzeichnet, dass** die Berechnung des Verzögerungswertes durch eine Wegberechnung aus einer Wegmessung mittels eines Wegmesssensors (29, 30) erfolgt.

8. Verfahren nach Anspruch 6, **dadurch gekennzeichnet, dass** die Berechnung des Verzögerungswertes unter Berücksichtigung einer Fahrgeschwindigkeit und unter Berücksichtigung des Ansprechverhaltens der Steuerung (27) und des Ansprechverhaltens der Hubaktoren (8, 13, 18, 23) erfolgt.

9. Verfahren nach einem der vorhergehenden Ansprüche, **dadurch gekennzeichnet, dass** die Berechnung des Verzögerungswertes für die linken Rechkreisel (17, 22) und die rechten Rechkreisel (7, 12) gesondert erfolgt.

10. Verfahren nach Anspruch 8, **dadurch gekennzeichnet, dass** die gesonderte Berechnung des Verzögerungswertes für die linken Rechkreisel (17, 22) und die rechten Rechkreisel (7, 12) dadurch erfolgt, dass an einem der linken Laufräder (4) ein linker Wegmesssensor (29) in Form eines Drehsensors ausgebildet ist, mittels welchem die Wegberechnung der linken Rechkreisel (17, 22) erfolgt und dass an einem der rechten Laufräder (5) ein rechter Wegmesssensor (30) in Form eines Drehsensors ausgebildet ist, mittels welchem die Wegberechnung der rechten Rechkreisel (7, 12) erfolgt.

11. Verfahren nach Anspruch 8, **dadurch gekennzeichnet, dass** die gesonderte Berechnung des Verzögerungswertes für die linken Rechkreisel (17, 22) und die rechten Rechkreisel (7, 12) dadurch erfolgt, dass an einem der Laufräder (4, 5) ein Wegmesssensor (29, 30) in Form eines Drehsensors ausgebildet ist und dass ein Winkelsensor (32) ausgebildet ist, mittels welchem ein Knickwinkel (33) eines Zugfahrzeuges (2) relativ zum Tragrahmen (3) ermittelt wird, wobei durch Berücksichtigung der Erfassungswerte des Wegmesssensors (29) und des Winkelsensors (32) die Wegberechnung der linken Rechkreisel (17, 22) und der rechten Rechkreisel (7, 12) gesondert erfolgt.

12. Mehrkreiselschwader (1) umfassend:
- einen Tragrahmen (3) und daran angeordnet zumindest ein linkes Laufrad (4) und zumindest ein rechtes Laufrad (5);
- einen in einer Arbeitsfahrtrichtung (6) rechten vorderen Rechkreisel (7), welcher mittels eines ersten Hubaktors (8) zwischen einer Arbeitsstellung (9) und einer Hubstellung (10) verstellbar ist;
- einen in der Arbeitsfahrtrichtung (6) rechten hinteren Rechkreisel (12), welcher mittels eines zweiten Hubaktors (13) zwischen einer Arbeitsstellung (14) und einer Hubstellung (15) verstellbar ist;
- einen in der Arbeitsfahrtrichtung (6) linken vorderen Rechkreisel (17), welcher mittels eines dritten Hubaktors (18) zwischen einer Arbeitsstellung (19) und einer Hubstellung (20) verstellbar ist;
- einen in der Arbeitsfahrtrichtung (6) linken hinteren Rechkreisel (22), welcher mittels eines vierten Hubaktors (23) zwischen einer Arbeitsstellung (24) und einer Hubstellung (25) verstellbar ist;
- eine Steuerung (27) zur Steuerung der Hubaktoren (8, 13, 18, 23),
**dadurch gekennzeichnet, dass** die Steuerung (27) zum Durchführen des Verfahrens nach Anspruch 1 oder 2 ausgebildet ist.

13. Steuerung (27) für einen Mehrkreiselschwader (1), **dadurch gekennzeichnet, dass** die Steuerung (27) Befehle umfasst, die den Mehrkreiselschwader (1) des Anspruchs 11 zum Durchführen des Verfahrens nach Anspruch 1 oder 2 veranlassen.

14. Computerprogramm, umfassend Befehle, die bei der Ausführung des Programms durch eine Steuerung (27), diese veranlassen, die Schritte des Verfahrens nach Anspruch 1 oder 2 auszuführen.

15. Computerlesbares Speichermedium, umfassend Befehle, die bei der Ausführung durch eine Steuerung (27) diese veranlassen, die Schritte des Verfahrens nach Anspruch 1 oder 2 auszuführen.

## Claims

1. A method for operating a multiple rotary rake (1) comprising:
- a support frame (3) and at least one left running wheel (4) and at least one right running wheel (5) arranged thereon;
- a rake rotor (7) in the front right as viewed in a working direction of travel (6), which rake rotor (7) is adjustable between a working position (9) and a lifting position (10) by means of a first lifting actuator (8);
- a rake rotor (12) in the rear right as viewed in a working direction of travel (6), which rake rotor (12) is adjustable between a working position (14) and a lifting position (15) by means of a second lifting actuator (13);
- a rake rotor (17) in the front left as viewed in a working direction of travel (6), which rake rotor (17) is adjustable between a working position (19) and a lifting position (20) by means of a third lifting actuator (18);
- a rake rotor (22) in the rear left as viewed in a working direction of travel (6), which rake rotor (22) is adjustable between a working position (24) and a lifting position (25) by means of a fourth lifting actuator (23);
- a controller (27), which is configured to control the lifting actuators (8, 13, 18, 23);
- a user interface (28) for inputting input commands, wherein the user interface (28) is coupled to the controller (27),
**characterized by** the method steps:
- windrowing crop (40), wherein all rake rotors (7, 12, 17, 22) are in their working position (9, 14, 19, 24);
- activating a lifting operation for transferring the right rake rotors (7, 12) into the lifting position (10, 15), wherein the lifting operation is initiated by a first input command, which is input by a machine operator, and wherein the front right rake rotor (7) is transferred into the lifting position (10) in a first step, and the rear right rake rotor (12) is transferred into the lifting position (15) with a delay value relative to the first step;
- activating a lifting operation for transferring the left rake rotors (17, 22) into the lifting position (20, 25), wherein the lifting operation is initiated by a second input command, which is input by a machine operator, and wherein the front left rake rotor (17) is transferred into the lifting position (20) in a second step, and the rear left rake rotor (22) is transferred into the lifting position (25) with a delay value relative to the second step.

2. A method for operating a multiple rotary rake (1) comprising:
- a support frame (3) and at least one left running wheel (4) and at least one right running wheel (5) arranged thereon;
- a rake rotor (7) in the front right as viewed in a working direction of travel (6), which rake rotor (7) is adjustable between a working position (9) and a lifting position (10) by means of a first lifting actuator (8);
- a rake rotor (12) in the rear right as viewed in a working direction of travel (6), which rake rotor (12) is adjustable between a working position (14) and a lifting position (15) by means of a second lifting actuator (13);
- a rake rotor (17) in the front left as viewed in a working direction of travel (6), which rake rotor (17) is adjustable between a working position (19) and a lifting position (20) by means of a third lifting actuator (18);
- a rake rotor (22) in the rear left as viewed in a working direction of travel (6), which rake rotor (22) is adjustable between a working position (24) and a lifting position (25) by means of a fourth lifting actuator (23);
- a controller (27), which is configured to control the lifting actuators (8, 13, 18, 23);
- an operator interface (28) for inputting input commands, wherein the operator interface (28) is coupled to the controller (27),
**characterized by** the method steps:
- windrowing crop (40), wherein all rake rotors (7, 12, 17, 22) are in their working position (9, 14, 19, 24);
- activating a lifting operation for transferring the left rake rotors (17, 22) into the lifting position (20, 25), wherein the lifting operation is initiated by a first input command, which is input by the machine operator, and wherein the front left rake rotor (17) is transferred into the lifting position (20) in a first step, and the rear left rake rotor (22) is transferred into the lifting position (25) with a delay value;
- activating a lifting operation for transferring the right rake rotors (7, 12) into the lifting position (10, 15), wherein the lifting operation is initiated by a second input command, which is input by the machine operator, and wherein the front right rake rotor (7) is transferred into the lifting position (10) in a first step, and the rear right rake rotor (12) is transferred into the lifting position (15) with a delay value.

3. The method according to claim 1 or 2, **characterized in that** the calculation of the delay value is factory-set and cannot be changed by the machine operator.

4. The method according to claim 1 or 2, **characterized in that** the calculation of the delay value is factory-set and can be changed by the machine operator by means of adjusting parameters.

5. The method according to one of the preceding claims, **characterized in that** the first input command is carried out by actuating a first input key (35) on the user interface (28), and that the second input command is carried out by actuating a second input key (36) on the user interface (28).

6. The method according to claim 5, **characterized in that** the first input key (35) and the second input key (36) are arranged on the user interface (28) so as to be structurally spaced apart from one another.

7. The method according to one of the preceding claims, **characterized in that** the calculation of the delay value is carried out by a path calculation from a path measurement by means of a path measuring sensor (29, 30).

8. The method according to claim 6, **characterized in that** the calculation of the delay value takes place with consideration of a travel speed and with consideration of the response behavior of the controller (27) and the response behavior of the lifting actuators (8, 13, 18,23).

9. The method according to one of the preceding claims, **characterized in that** the calculations of the delay values for the left rake rotors (17, 22) and the right rake rotors (7, 12) take place separately.

10. The method according to claim 8, **characterized in that** the separate calculation of the delay value for the left rake rotors (17, 22) and the right rake rotors (7, 12) takes place in that a left path measuring sensor (29) in the form of a rotation sensor is formed on one of the left running wheels (4), by means of which sensor (29) the path calculation of the left rake rotors (17, 22) takes place, and that a right path measuring sensor (30) in the form of a rotation sensor is formed on one of the right running wheels (5), by means of which sensor (30) the path calculation of the right rake rotors (7, 12) takes place.

11. The method according to claim 8, **characterized in that** the separate calculation of the delay value for the left rake rotors (17, 22) and the right rake rotors (7, 12) takes place in that a path measuring sensor (29, 30) in the form of a rotation sensor is formed on one of the running wheels (4, 5), and that an angle sensor (32) is formed, by means of which a buckling angle (33) of a towing vehicle (2) relative to the support frame (3) is determined, wherein the path calculations of the left rake rotors (17, 22) and the right rake rotors (7, 12) take place separately with consideration of the detected values of the path measuring sensor (29) and the angle sensor (32).

12. Multiple rotary rake (1) comprising:
- a support frame (3) and at least one left running wheel (4) and at least one right running wheel (5) arranged thereon;
- a rake rotor (7) in the front right as viewed in a working direction of travel (6), which rake rotor (7) is adjustable between a working position (9) and a lifting position (10) by means of a first lifting actuator (8);
- a rake rotor (12) in the rear right as viewed in a working direction of travel (6), which rake rotor (12) is adjustable between a working position (14) and a lifting position (15) by means of a second lifting actuator (13);
- a rake rotor (17) in the front left as viewed in a working direction of travel (6), which rake rotor (17) is adjustable between a working position (19) and a lifting position (20) by means of a third lifting actuator (18);
- a rake rotor (22) in the rear left as viewed in a working direction of travel (6), which rake rotor (22) is adjustable between a working position (24) and a lifting position (25) by means of a fourth lifting actuator (23);
- a controller (27), which is configured to control the lifting actuators (8, 13, 18, 23); **characterized in that** the controller (27) is configured to perform the method according to claim 1 or 2.

13. A controller (27) for a multiple rotary rake (1), **characterized in that** the controller (27) comprises commands which cause the multiple rotary rake (1) of claim 11 to perform the method according to claim 1 or 2.

14. A computer program, comprising commands, which, upon execution of the program by a controller (27), cause the same to carry out the steps of the method according to claim 1 or 2.

15. A computer-readable storage medium, comprising commands which, upon execution by a controller (27), case the same to perform the steps of the method according to claim 1 or 2.

## Revendications

1. Procédé de fonctionnement d'une andaineuse multirotative (1) comprenant :
- un châssis porteur (3) et au moins une roue gauche (4) et au moins une roue droite (5), disposées sur celui-ci ;
- un rotor avant droit (7), dans un sens de la marche (6), qui peut être déplacé au moyen d'un premier actionneur de levage (8) entre une position de travail (9) et une position de levage (10) ;
- un rotor arrière droit (12), dans le sens de la marche (6), qui peut être déplacé au moyen d'un deuxième actionneur de levage (13) entre une position de travail (14) et une position de levage (15) ;
- un rotor avant gauche (17), dans le sens de la marche (6), qui peut être déplacé au moyen d'un troisième actionneur de levage (18) entre une position de travail (19) et une position de levage (20) ;
- un rotor arrière gauche (22), dans le sens de la marche (6), qui peut être déplacé au moyen d'un quatrième actionneur de levage (23) entre une position de travail (24) et une position de levage (25) ;
- une commande (27) qui est conçue pour contrôler les actionneurs de levage (8, 13, 18, 23) ;
- une interface utilisateur (28) pour la saisie d'instructions, dans laquelle l'interface utilisateur (28) est couplée avec la commande (27),
**caractérisé par** les étapes suivantes :
- andainage de la récolte (40), dans lequel tous les rotors (7, 12, 17, 22) se trouvent dans leur position de travail (9, 14, 19, 24) ;
- activation d'un processus de levage pour amener le rotor droit (7, 12) dans la position de levage (10, 15), dans laquelle le processus de levage est démarré par une première instruction, qui est saisie par un opérateur et dans laquelle, dans une première étape, le rotor avant droit (7) est amené dans la position de levage (10) et, avec une valeur de retardement par rapport à la première étape, le rotor arrière droit (12) est amené dans la position de levage (15) ;
- activation d'un processus de levage pour amener le rotor gauche (17, 22) dans la position de levage (20, 25), dans laquelle le processus de levage est démarré par une deuxième instruction, qui est saisie par un opérateur et dans laquelle, dans une deuxième étape, le rotor avant gauche (17) est amené dans la position de levage (20) et, avec une valeur de retardement par rapport à la deuxième étape, le rotor arrière gauche (22) est amené dans la position de levage (25).

2. Procédé de fonctionnement d'une andaineuse multirotative (1) comprenant :
- un châssis porteur (3) et unau moins une roue gauche (4) et au moins une roue droite (5), disposées sur celui-ci ;
- un rotor avant droit (7), dans un sens de la marche (6), qui peut être déplacé au moyen d'un premier actionneur de levage (8) entre une position de travail (9) et une position de levage (10) ;
- un rotor arrière droit (12), dans le sens de la marche (6), qui peut être déplacé au moyen d'un deuxième actionneur de levage (13) entre une position de travail (14) et une position de levage (15) ;
- un rotor avant gauche (17), dans le sens de la marche (6), qui peut être déplacé au moyen d'un troisième actionneur de levage (18) entre une position de travail (19) et une position de levage (20) ;
- un rotor arrière gauche (22), dans le sens de la marche (6), qui peut être déplacé au moyen d'un quatrième actionneur de levage (23) entre une position de travail (24) et une position de levage (25) ;
- une commande (27) qui est conçue pour contrôler les actionneurs de levage (8, 13, 18, 23) ;
- une interface utilisateur (28) pour la saisie d'instructions, dans laquelle l'interface utilisateur (28) est couplée avec la commande (27),
**caractérisé par** les étapes suivantes :
- andainage de la récolte (40), dans lequel tous les rotors (7, 12, 17, 22) se trouvent dans leur position de travail (9, 14, 19, 24) ;
- activation d'un processus de levage pour amener le rotor gauche (17, 22) dans la position de levage (20, 25), dans laquelle le processus de levage est démarré par une première instruction, qui est saisie par un opérateur et dans laquelle, dans une première étape, le rotor avant gauche (17) est amené dans la position de levage (20) et, avec une valeur de retardement, le rotor arrière gauche (22) est amené dans la position de levage (25) ;
- activation d'un processus de levage pour amener le rotor droit (7, 12) dans la position de levage (10, 15), dans laquelle le processus de levage est démarré par une deuxième instruction, qui est saisie par un opérateur et dans laquelle, dans une première étape, le rotor avant droit (7) est amené dans la position de levage (10) et, avec une valeur de retardement par rapport à la deuxième étape, le rotor arrière droit (12) est amené dans la position de levage (15).

3. Procédé selon la revendication 1 ou 2, **caractérisé en ce que** le calcul de la valeur de retardement est prédéterminé en usine et ne peut pas être modifié par l'opérateur.

4. Procédé selon la revendication 1 ou 2, **caractérisé en ce que** le calcul de la valeur de retardement est prédéterminé en usine et peut être modifié par l'opérateur au moyen de paramètres de réglage.

5. Procédé selon l'une des revendications précédentes, **caractérisé en ce que** la première instruction est entrée par l'actionnement d'une première touche de saisie (35) sur l'interface utilisateur (28) et **en ce que** la deuxième instruction est entrée par l'actionnement d'une deuxième touche de saisie (36) sur l'interface utilisateur (28).

6. Procédé selon la revendication 5, **caractérisé en ce que** la première touche de saisie (35) et la deuxième touche de saisie (36) sont disposées de manière distante l'une de l'autre sur l'interface utilisateur (28).

7. Procédé selon l'une des revendications précédentes, **caractérisé en ce que** le calcul de la valeur de retardement est effectué à l'aide d'un calcul de trajectoire à partir d'une mesure de trajectoire au moyen d'un capteur de mesure de trajectoire (29, 30).

8. Procédé selon la revendication 6, **caractérisé en ce que** le calcul de la valeur de retardement est effectué en tenant compte d'une vitesse de marche et en tenant compte de la réactivité de la commande (27) et de la réactivité des actionneurs de levage (8, 13, 18,23).

9. Procédé selon l'une des revendications précédentes, **caractérisé en ce que** le calcul de la valeur de retardement est effectué séparément pour les rotors gauches (17, 22) et pour les rotors droits (7, 12).

10. Procédé selon la revendication 8, **caractérisé en ce que** le calcul séparé de la valeur de retardement pour les rotors gauches (17, 22) et pour les rotors droits (7, 12) est effectué à l'aide d'un capteur de mesure de trajectoire gauche (29), conçu sous la forme d'un capteur de rotation, disposé sur une des roues gauches (4), au moyen duquel le calcul de trajectoire des rotors gauches (17, 22) est effectué, et à l'aide d'un capteur de mesure de trajectoire droit (30), conçu sous la forme d'un capteur de rotation, disposé sur une des roues droites (5), au moyen duquel le calcul de trajectoire des rotors droits (7, 12) est effectué.

11. Procédé selon la revendication 8, **caractérisé en ce que** le calcul séparé de la valeur de retardement pour les rotors gauches (17, 22) et pour les rotors droits (7, 12) est effectué à l'aide d'un capteur de mesure de trajectoire (29, 30), conçu sous la forme d'un capteur de rotation, disposé sur une des roues (4, 5), et **en ce qu'**un capteur d'angle (32) est prévu, au moyen duquel un angle de déviation (33) d'un véhicule tracteur (2) par rapport au châssis porteur (3) est déterminé, dans lequel, en tenant compte des valeurs de mesure du capteur de mesure de trajectoire (29) et du capteur d'angle (32), le calcul de la trajectoire des rotors gauches (17, 22) et des rotors droits (7, 12) est effectué séparément.

12. Andaineuse multirotative (1) comprenant :
- un châssis porteur (3) et au moins une roue gauche (4) et au moins une roue droite (5), disposées sur celui-ci ;
- un rotor avant droit (7), dans un sens de la marche (6), qui peut être déplacé au moyen d'un premier actionneur de levage (8) entre une position de travail (9) et une position de levage (10) ;
- un rotor arrière droit (12), dans le sens de la marche (6), qui peut être déplacé au moyen d'un deuxième actionneur de levage (13) entre une position de travail (14) et une position de levage (15) ;
- un rotor avant gauche (17), dans le sens de la marche (6), qui peut être déplacé au moyen d'un troisième actionneur de levage (18) entre une position de travail (19) et une position de levage (20) ;
- un rotor arrière gauche (22), dans le sens de la marche (6), qui peut être déplacé au moyen d'un quatrième actionneur de levage (23) entre une position de travail (24) et une position de levage (25) ;
- une commande (27) qui est conçue pour contrôler les actionneurs de levage (8, 13, 18, 23) ;
**caractérisé en ce que** la commande (27) est conçue pour l'exécution du procédé selon la revendication 1 ou 2.

13. Commande (27) pour une andaineuse multirotative (1), **caractérisée en ce que** la commande (27) comprend des instructions qui font en sorte que l'andaineuse multirotative (1) selon la revendication 11 exécute le procédé selon la revendication 1 ou 2.

14. Programme informatique comprenant des instructions qui, lors de l'exécution du programme par une commande (27), font en sorte que celle-ci exécute les étapes du procédé selon la revendication 1 ou 2.

15. Support de stockage lisible par un ordinateur, qui, lors de l'exécution par une commande (27), font en sorte que celle-ci exécute les étapes du procédé selon la revendication 1 ou 2.
